Europäisches Patentamt

European Patent Office

Office européen des brevets

(19)

(11) Veröffentlichungsnummer: **0 049 421**
**B1**

# EUROPÄISCHE PATENTSCHRIFT

(12)

(45) Veröffentlichungstag der Patentschrift:
**23.04.86**

(51) Int. Cl.⁴: **B 62 J 6/00**

(21) Anmeldenummer: **81107562.1**

(22) Anmeldetag: **23.09.81**

(54) **Abschlussteil für Schutzbleche an Zweirädern.**

(30) Priorität: **02.10.80 DE 8026324 U**

(43) Veröffentlichungstag der Anmeldung:
**14.04.82 Patentblatt 82/15**

(45) Bekanntmachung des Hinweises auf die Patenterteilung:
**23.04.86 Patentblatt 86/17**

(84) Benannte Vertragsstaaten:
**BE DE FR GB IT NL SE**

(56) Entgegenhaltungen:
**BE - A - 538 510**
**DE - A - 1 910 452**
**DE - A - 3 129 394**
**FR - A - 863 988**
**GB - A - 1 911 573**
**NL - A - 7 904 228**

(73) Patentinhaber: **Fenn, Hans, Wernings Hof 1,**
**D-4800 Bielefeld 17 (DE)**

(72) Erfinder: **Fenn, Hans, Wernings Hof 1,**
**D-4800 Bielefeld 17 (DE)**

(74) Vertreter: **Hanewinkel, Lorenz, Dipl.-Phys. et al,**
**Patentanwälte Dr.Ing. Heinz Nickels Dipl.-Phys. Lorenz**
**Hanewinkel Detmolder Strasse 26,**
**D-4800 Bielefeld 1 (DE)**

ACTORUM AG

## Beschreibung

Die Erfindung bezieht sich auf ein Abschlussteil für Schutzbleche an Zweirädern, wie Fahrrädern, Motorrädern od. dgl.

Bisher ist es bei verschiedenen Fahrrädern üblich und gewünscht, den unteren Längenendbereich des hinteren Schutzbleches mit einer weissfarbigen Lackierung zu versehen, die einerseits einen optischen Abschluss bringen und andererseits zur Verkehrssicherheit beitragen soll.

Diese zusätzliche Weisslackierung ist jedoch herstellungsmässig aufwendig und somit kostspielig und bringt keine ausreichende Verkehrssicherheit, da sie einerseits nur sehr schwach reflektiert und zum anderen nach einer gewissen Zeit durch Stoss-, Schlag- und Kratzeinwirkung beschädigt und somit nur noch teilweise vorhanden ist.

Des weiteren ist aus der GB-A-573/1911 ein Abschlussteil für Schutzbleche gemäss dem Oberbegriff des Anspruchs 1 aus weissem Kunststoff bekannt, das mit hakenartigen Haltemitteln an dem Schutzblech festlegbar ist und einen optischen sowie verkehrssicheren Abschluss bildet.

Dieses Abschlussteil hat jedoch keine Vorkehrungen für die Anbringung eines Rückstrahlers oder Rücklichts.

Aufgabe der Erfindung ist es, ein einfach aufgebautes und kostengünstig herstellbares sowie leicht montierbares Abschlussteil zu schaffen, welches neben seiner reflektierenden und verkehrssicheren Wirkung auch für die Integration mit einem Rückstrahler bzw. Rücklicht ausgeführt ist.

Diese Aufgabe wird erfindungsgemäss durch die Merkmale des Anspruchs 1 gelöst.

Vorteilhafte Weiterbildungen sind aus den Unteransprüchen zu entnehmen.

Das erfindungsgemässe Abschlussteil ist als Formteil einfach aufgebaut, preisgünstig herstellbar und leicht zu montieren und es besteht aus einem schlag- und kratzfesten Kunststoff, wodurch eine Beschädigung bzw. ein unschönes Aussehen der Schutzblechenden ausgeschlossen wird.

Das Abschlussteil trägt durch seine reflektierende Wirkung erheblich zur Verkehrssicherheit bei, da es am hinteren Schutzblech angeordnet, eine gut sichtbare Signalfläche bildet. Da das Kunststoffteil dauerhaft haltbar ausgeführt ist, bleibt auch die reflektierende Wirkung langlebig vorhanden, und das Abschlussteil erhält einen hohen Gebrauchswert.

Dieses Abschlussteil kann auch zusätzlich am unteren Ende des vorderen Schutzbleches angeordnet werden, so dass beim Lenken des Zweirades auch vorderseitig eine Signalfläche vorhanden ist.

Weiterhin ist in dem Formteil ein Rückstrahler oder Rücklicht lagefixierbar einsetzbar, oder aber das Rücklicht ist gleichzeitig Bestandteil des Abschlussteiles, so dass beim Anbringen des Abschlussteiles am Schutzblech das Rücklicht automatisch angebracht ist und es braucht dann lediglich noch die elektrische Leitung zum Dynamo hin geführt und an diesem angeklemmt zu werden. Hierfür ist das Formteil mit einer kostengünstig herstellbaren Aufnahme bzw. Aufnahme mit Lampensockel und verrastbarem Reflektor ausgestattet.

Anhand der Zeichnungen werden nachfolgend Ausführungsbeispiele gemäss der Erfindung näher erläutert. Dabei zeigt:

Fig. 1 einen Längsschnitt durch ein an einem Zweirad-Schutzblech festgelegtes Abschlussteil;

Fig. 2 einen Querschnitt durch das Abschlussteil;

Fig. 3 eine Vorderansicht des Abschlussteiles;

Fig. 4 eine Seitenansicht eines Teilbereiches des Abschlussteiles mit angeformter Rücklicht-Aufnahme;

Fig. 5 eine perspektivische Ansicht eines Abschlussteiles mit integriertem Rücklicht;

Fig. 6 einen Längsschnitt durch dasselbe Abschlussteil mit Rücklicht bei abgenommenem Reflektor und ohne Lampe und

Fig. 7 und 8 Querschnitte durch das Abschlussteil mit Rücklicht gemäss Schnittlinie VII–VIII in zwei Ausführungsarten für die Festlegung des Reflektors an Stegen des Abschlussteiles.

Das erfindungsgemässe Abschlussteil 1 für Schutzbleche 2 an Zweirädern, wie Fahrrädern, Motorrädern u. dgl. ist von einem am unteren Längenendbereich des Schutzbleches 2 auf demselben lösbar festlegbaren Formteil aus einem reflektierenden Kunststoff gebildet und stellt am Schutzblech 2 eine Signalfläche dar.

Das Abschlussteil 1 überdeckt die gesamte Breite des Schutzbleches 2 und erstreckt sich auf einem Teilbereich der Schutzblechlänge, und zwar am unteren Schutzblechende nach oben hin bis über den Bereich des Rückstrahlers bzw. Rücklichtes hinaus.

Das Abschlussteil 1 hat eine entsprechend dem Schutzblech 2 gebogene Längsform und besitzt einen Querschnitt, der dem Querschnitt des jeweiligen Schutzbleches 2 angepasst ist. Schutzbleche 2 gibt es in verschiedenen Querschnitten und entsprechend dieser Querschnittarten ist auch das Abschlussteil 1 geformt – so hat das Abschlussteil 1 einen rinnenförmigen Querschnitt, wie z.B. trapezförmigen, bogenförmigen, prismaartigen Querschnitt.

Die Befestigung des Abschlussteiles 1 am Schutzblech 2 erfolgt durch angeformte Haltemittel in Steck- und Rastausführung. Hierfür sind an den beiden Längskanten des Abschlussteiles 1 an den beiden Enden innenseitig vorstehende Haltewinkel 3 mit Rastnasen 4 angeformt. Diese vier Haltewinkel 3 nehmen jeweils einen kurzen Längenbereich der Abschlussteil-Längskante ein und bilden zwischen sich und der Abschlussteil-Innenseite eine Rastnut 5, mit der der Rand des Schutzbleches 2 überfasst wird. Die an den freien Schenkelenden der Haltewinkel 3 angeformten und in die Rastnut 5 hineinragenden Rastnasen 4 ergeben eine Klemmhalterung zur lagesicheren Abschlussteilbefestigung auf dem Schutzblech 2.

Die vier Ecken des Abschlussteiles 1 sind mit Abschrägungen 6 oder Abrundungen ausgestattet, so dass das längliche Abschlussteil 1 eckseitig keine scharfen Kanten aufweist und ein gefälliges Äusseres zeigt.

Im Bereich des an dem Schutzblech 2 befestigten Rückstrahlers bzw. Rücklichtes kann das Abschlussteil 1 mit einer entsprechenden Aussparung (nicht dargestellt) versehen werden, so dass das auf dem Schutzblech 2 aufliegende Abschlussteil 1 den Rückstrahler übergreift und hindurchlässt.

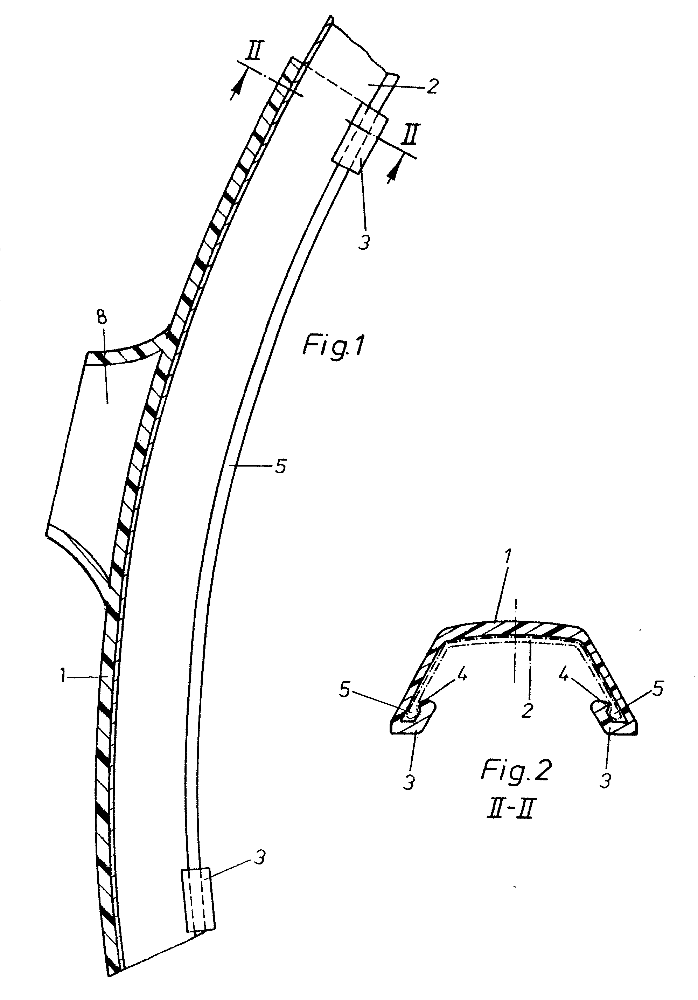

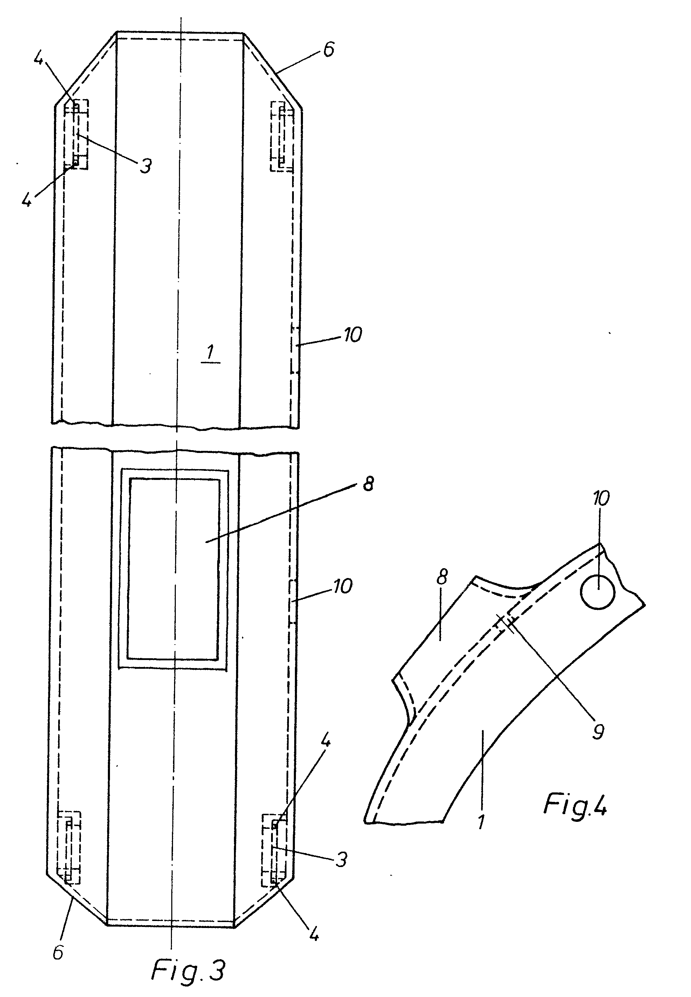

Es ist bevorzugt, das Abschlussteil 1 mit einer sichtseitig vorstehenden, angeformten Aufnahme 8 in Kastenform auszustatten (vgl. Fig. 1, 3 und 4), so dass das Rücklicht bzw. der Rückstrahler in dieser Aufnahme 8 durch Stecken, Klemmen, Rasten, Schrauben od. dgl. befestigt werden kann. Bei im Bereich der Aufnahme 8 durchgehendem Abdeckteil 1 ist dieses mit einer Kabeldurchführung (Loch) 9 ausgestattet. Auch kann im Bereich der Aufnahme 8 das Abschlussteil 1 zum Schutzblech 2 hin offen sein und das elektrische Kabel durchlassen.

Da an den Schutzblechen 2 auch Streben des Zweirades befestigt werden, ist das Abschlussteil 1 in seinen seitlichen Längsbereichen mit je einem oder mehreren Durchtrittsöffnungen 10 für die Befestigungsmittel (Schrauben) ausgestattet. Diese Durchtrittsöffnungen 10 in Loch- oder Schlitzform sind entsprechend der Form und Anordnung der Streben ausgeführt.

Hierdurch ist es auch möglich, das Abschlussteil 1 ohne gesonderte Haltemittel 3 auszuführen und dieses durch die Streben-Befestigungsmittel auf dem Schutzblech 2 festzulegen. Dieses ist jedoch abhängig von der jeweiligen Schutzblech-Bauart.

Das Abschlussteil 1 mit seinen Haltemitteln 3 und der Rücklichtaufnahme 8 ist einteilig aus einem schlag- und kratzfesten Kunststoff mit vorzugsweise weisser Farbe hergestellt.

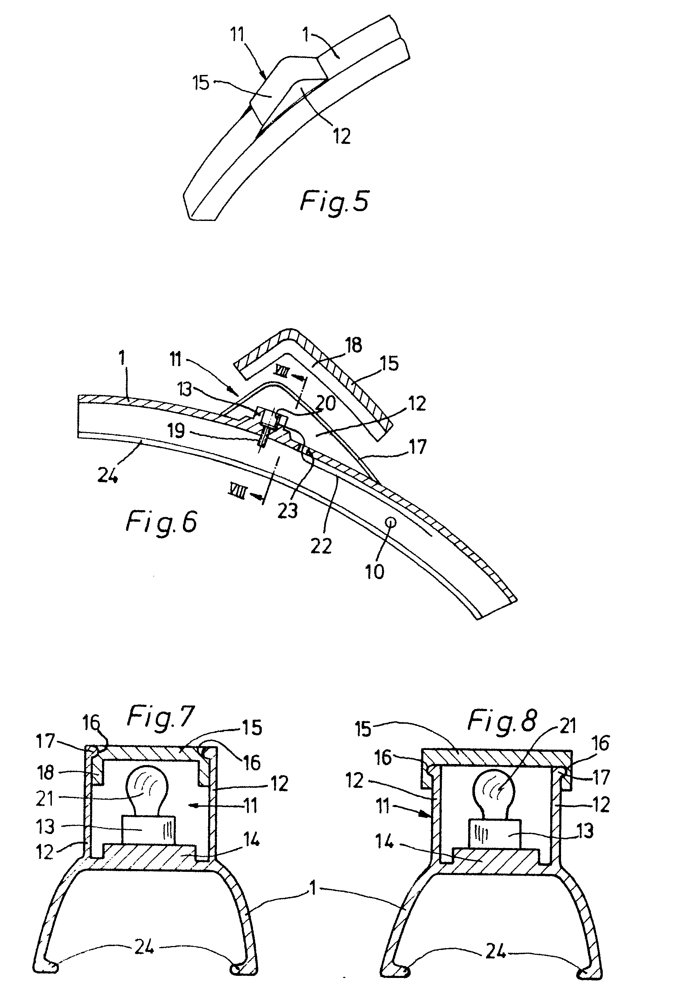

Das Abschlussteil gemäss der weiteren Ausführung nach den Fig. 5 bis 8 ist mit einem integrierten Rücklicht 11 ausgestattet, wodurch an das Formteil 1 im Abstand zum unteren Längenende zwei seitliche Stege (Seitenwände) 12 angeformt sind, die parallel zueinander verlaufen und nach oben gerichtet sind. Diese Stege 12 haben eine dreieckige Form (von der Seite her gesehen) und besitzen dabei unterschiedlich lange Dreiecksseiten (-schenkel), von denen der längere zum unteren Formteil-Längenende hin gerichtet ist.

Zwischen den beiden Stegen 12 ist das Formteil 1 mit einem angeformten Lampensockel 13 versehen, der sich auf einer Materialverdickung 14 der Formteil-Oberseite abstützt.

Zur Komplettierung des Rücklichtes 11 ist ein lösbar an den Stegen 12 befestigter Reflektor 15 vorgesehen, der in bevorzugter Weise durch Rastverbindung in Form von Nut 16 und Feder 17 an den Stegen 12 gehalten wird. Die Nut (Rille) 16 bzw. Feder (Wulst, Rippe od. dgl.) 17 lassen sich sowohl an den Stegen 12 als auch am Reflektor 15 wahlweise vorsehen.

Der Reflektor 15 ist als Winkelteil ausgeführt und hat dabei entsprechend der Steg-Dreiecksseiten unterschiedlich lange Winkelschenkel; er schliesst im verbundenen Zustand mit den Stirnkanten seiner Winkelschenkel bündig auf der Oberseite des Formteiles 1 ab.

Der Reflektor 15 zeigt an den beiden Längsseiten seiner Winkelschenkel je einen heruntergezogenen Rand 18, mit dem er zwischen die Stege 12 fasst oder über die Stege 12 in deren oberen Randbereich greift.

Bei der Anordnung des Reflektors 15 zwischen den Stegen 12 nach Fig. 7 schliesst dieser mit seiner Aussenseite bündig mit den Dreieckseiten der Stege 12 ab und seine Ränder 18 liegen innen an den Stegen 12 an. Im freien Randbereich der Dreieckseiten hat jeder Steg 12 eine nach innen vorstehende Wulst 17 als Rastmittel, die in eine Nut 16 des Reflektors 15 einfasst. Die Nut 16 erstreckt sich im Eckbereich des Reflektors 15 zu den Rändern 18 hin über die gesamte Winkelform.

Bei der Anordnung des Reflektors 15 über den Stegen 12 nach Fig. 8 ist derselbe im inneren Eckbereich an den Rändern 18 mit je einer Nut 16 versehen und die Stege 12 haben an den Dreieckseitenrändern nach aussen vorstehende Wülste 17, die in die Nuten 16 einrasten.

Das Formteil 1 mit Sockel 13, Materialverdickung 14 und Stegen 12 ist als einstückiges Teil aus weissfarbigem und reflektierendem Kunststoff hergestellt und der Reflektor 15 besteht als einteiliges Werkstück ebenfalls aus Kunststoff, jedoch in roter Farbgebung. Durch die seitlich hochgezogenen Stege 12 des Rücklichtes 11 ermöglicht das Abschlussteil auch eine seitliche Reflektion im Rücklichtbereich, wobei bei der Ausführung nach Fig. 7 der Reflektor 15 von der Seite her nicht sichtbar ist, da er zwischen den Stegen 12 liegt, und wobei der Reflektor 15 bei der Anordnung nach Fig. 8 im Randbereich der hochgezogenen Stege 12 als rotfarbiger Rand von der Seite her sichtbar ist.

Bei der Fertigung des einstückigen Abschlussteiles wird in dem Lampensockel 13 eine Erdungsschraube 19, ein Erdungsstift oder ein Erdungsblech mit eingebracht, die bzw. das durch die Materialverdickung 14 hindurchragt und bei der Anbringung des Abschlusteiles auf dem Schutzblech 2 mit dem Schutzblech 2 Kontakt eingeht. Weiterhin wird in dem Lampensockel 13 herstellungsmässig ein elektrischer Kontakt 20 für die eingeschraubte Lampe 21 vorgesehen. Von diesem elektrischen Kontakt 20 ist eine elektrische Leitung 22 aus dem Sockel 13 herausgeführt, die durch eine Bohrung 32 im Formteil 1 neben dem Sockel 13 und noch innerhalb des Rücklichtbereiches nach unten durch das Formteil 1 hindurch (zum Schutzblech 2 hin) geführt ist, so dass diese elektrische Leitung 22 am Schutzblech 2 und den geeigneten Zweiradteilen zum Dynamo hin verlaufen kann und dabei im Bereich des reflektierenden Abschlussteiles nicht sichtbar ist.

An den beiden Längsrändern ist das Formteil 1 jeweils mit durchgehenden Rastwulsten 24 versehen, die an der Formteil-Innenseite verlaufen, die gesamte Formteillänge einnehmen, einander zugewendet sind und für die Rastbefestigung des
Abschlussteiles auf dem Schutzblech 2 dienen.

**Patentansprüche**

1. Abschlussteil für Schutzbleche an Zweirädern, mit einem am unteren Längenendbereich
des Schutzbleches (2) auf demselben lösbar festlegbaren, eine Signalfläche ergebenden Formteil
(1) aus einem reflektierenden Kunststoff,

das in Längsrichtung entsprechend der Schutzblechform bogenförmig ausgebildet ist und einen,
dem Schutzblech-Querschnitt angepassten, rinnenförmigen Querschnitt aufweist, wobei

das Formteil (1) eine Länge hat, die von dem
unteren Ende des Schutzbleches (2) bis über den
Rücklicht- bzw. Rückstrahlerbereich hinaus nach
oben verläuft, und eine, die gesamte Schutzblechbreite einnehmende Breite zeigt, und

das Formteil (1) ferner an seinen beiden Längskanten mit angeformten Steck- und Rastmitteln (3)
für die lösbare Befestigung auf dem Schutzblech
(2) versehen ist, dadurch gekennzeichnet,

dass das Formteil (1) mit einer sichtseitig vorstehenden, angeformten Aufnahme (8/12) für einen Rückstrahler bzw. ein Rücklicht (11) ausgestattet ist.

2. Abschlussteil nach Anspruch 1, dadurch gekennzeichnet, dass das Formteil (1) mit den Steck-
und Rastmitteln (3) und der Aufnahme (8/12) einteilig aus einem schlag- und kratzfesten Kunststoff
in weisser Farbgebung hergestellt ist.

3. Abschlussteil nach Anspruch 1 und 2, dadurch gekennzeichnet, dass die Aufnahme (8) kastenförmig ausgebildet ist, in der der Rückstrahler
bzw. das Rücklicht (11) lagefixiert einsetzbar ist.

4. Abschlussteil nach Anspruch 1 und 2, dadurch gekennzeichnet, dass an das Formteil (1)
als Aufnahme für das Rücklicht (11) zwei nach
aussen vorstehende und parallellaufende, im Abstand zum unteren Längenende des Formteiles (1)
stehende Stege (12) und dazwischen ein Lampensockel (13) angeformt sind und an den Stegen (12)
ein Reflektor (15) unter Rastverbindung (16, 17)
lösbar gehalten ist.

5. Abschlussteil nach Anspruch 4, dadurch gekennzeichnet, dass die einen Teilbereich der Länge des Formteiles (1) einnehmenden Stege (12) in
der Seitenansicht eine dreieckige Grundform mit
unterschiedlich langen Dreieckseiten aufweisen,
wobei die längere Dreieckseite der Stege (12) zum
unteren Längenende des Abschlussteiles zeigt,
und der Reflektor (15) von einem Winkelteil mit der
Länge der Steg-Dreieckseiten entsprechenden
Winkelschenkeln gebildet ist, die mit ihren Stirnenden mit der Formteiloberseite bündig abschliessen.

6. Abschlussteil nach Anspruch 4 und 5, dadurch gekennzeichnet, dass die Stege (12) an den
Längskanten ihrer Dreieckseiten innen- oder aussenseitig vorstehende Wülste (17) oder innen-
oder aussenseitig ausgenommene Nuten (17) aufweisen, über die bzw. in die der Reflektor (15) mit
entsprechenden Gegenstücken (16, 17) rastend
gehalten ist.

7. Abschlussteil nach Anspruch 4 und 6, dadurch gekennzeichnet, dass der winkelförmige
Reflektor (15) an seinen beiden Längskanten abgewinkelte Ränder (18) aufweist, in deren Bereich
die Nut (16) oder Feder (17) vorgesehen ist, wobei
der Reflektor (15) mit diesen abgewinkelten Rändern (18) zwischen die Stege (12) bündig abschliessend fasst oder mit den Rändern (18) die
Stege (12) im freien Randbereich übergreift.

8. Abschlussteil nach Anspruch 1 und 2, dadurch gekennzeichnet, dass das Formteil (1) an
beiden Längsrändern mit über die gesamte Formteillänge verlaufenden, nach innen vorstehenden
Rastkanten (24), wie Wülsten, Abwinklungen od.
dgl. für die lösbare Festlegung des Abschlussteiles auf dem Schutzblech (2) herstellungsmässig
versehen ist.

9. Abschlussteil nach Anspruch 4, dadurch gekennzeichnet, dass das Formteil (1) mit Lampensockel (13) und Stegen (12) einteilig aus einem
reflektierenden Kunststoff, hergestellt ist und dabei im Lampensockel (13) ein Erdungsteil (19) in
Form einer Schraube, eines Stiftes, eines Bleches
od. dgl. für eine Kontaktierung mit dem Schutzblech (2) und ein elektrischer Kontakt (20) für die
Lampe (21) eingelassen ist, wobei vom elektrischen Kontakt (20) eine elektrische Leitung (22)
aus dem Sockel (13) heraus und durch eine Öffnung (23) im Formteil (1) geführt ist.

10. Abschlussteil nach Anspruch 1, dadurch gekennzeichnet, dass das Formteil (1) in seinen beiden Seitenbereichen Durchtrittsöffnungen (10) in
Loch- oder Schlitzform für die Befestigung von
Streben am Schutzblech aufweist.

11. Abschlussteil nach Anspruch 1, dadurch gekennzeichnet, dass das Formteil (1) an seinen vier
Ecken mit Abschrägungen (6) oder Abrundungen
ausgestattet ist.

**Claims**

1. Closure piece for guard plates on bicycles
with a formed part (1) made of reflecting plastic
resulting in a signal area to be secured in position
loosely on the guard plate's (2) lower lengthwise
end area. The formed part is designed in a curve
to correspond to the guard plate form in the longitudinal direction, with a gutter-shaped cross
section adapted to the guard plate cross section,
whereby the formed part (1) runs up over the
backlight and reflex reflector area, with a width
taking up the entire guard plate width. The formed
part (1) is furthermore provided with shaped connecting and arresting features (3) at its two longitudinal edges for easy attachment to the guard
plate (2). The formed part (1) has a further feature
of a formed receptacle (8/12) projecting to be visible to take a back light and reflex reflector (11).

2. Closure piece according to Claim 1, featuring
the formed piece (1) with the connecting and arresting features (3) and receptacle (8/12) provided
from one piece from an impact and marr-resistant
plastic in white styling.

3. Closure piece according to Claims 1 and 2,
featuring the receptacle (8) designed box-shaped, in which the reflex reflector and/or back light (11) can be inserted to be fixed in position.

4. Closure piece according to Claims 1 and 2, featuring two projecting and parallel webs (12) at a distance to the lower lengthwise end of the formed part (1) shaped on the formed part (1) as a receptacle for the back light (11) and between them a lamp socket (13), and a reflector (15) retained on the webs (12) with snap connection (16, 17).

5. Closure piece according to Claim 4 featuring the webs (12) taking up a partial area of the length of the formed piece (1) having a basic triangular shape from the side view with triangular sides of varying length, whereby the longer triangular side of the webs (12) points to the lower longitudinal end of the closure part, and the reflector (15) forming from an angle part with the length of the webs' triangular sides corresponding to the angle legs, closing flush to the formed part topside with their front ends.

6. Closure piece according to Claims 4 and 5, featuring the webs (12) with a bead (17) projecting inwardly or outwardly on the longitudinal edges of their triangular sides or slots (17) on the inside or out, through or in which the reflector (15) is held clipped with corresponding counterparts (16, 17).

7. Closure piece according to Claims 4 and 6, featuring the angular reflector (15) having edges (18) forming an angle on its two longitudinal edges. The slot (16) or tongue (17) is provided in the area of the edges (18), whereby the reflector (15) holds flushly to close between the webs (12) with these angled edges (18) or overlaps the webs (12) with the edges (18) in the free edge area.

8. Closure piece according to Claims 1 and 2, featuring the formed part (1) provided with, on the two longitudinal edges, arresting edges (24) projecting inwards and running the entire length of the formed part, such as beads, angles or the like, for applying the closure part to the guard plate (2) to be loosened, in a manner fit for production.

9. Closure piece according to Claim 4, featuring the formed part (1) with lamp socket (13) and webs (12) being made of a single-piece reflecting plastic and here an earthing part (19) being countersunk in the lamp socket (13) in the form of a screw, pin, sheet or the like for connecting with the guard plate (2) and an electrical contact (20) for the lamp (21), whereby from the electrical contact (20) an electric line (22) is conducted from the socket (13) and through an opening (23) in the formed part (1).

10. Closure piece according to Claim 1, featuring the formed part (1) having through openings (10) in its two side areas in perforated or slotted form for attaching the webs to the guard plate.

11. Closure piece according to Claim 1, featuring the formed part (1) being provided with chamfers (6) or round-offs at its four corners.

## Revendications

1. Pièce de fermeture pour tôles de protection sur deux-roues avec un préformé (1) en plastique réfléchissant, se traduisant par une surface de signalisation, fixable et desserrable sur la portion longitudinale inférieure de la tôle de protection (2),

qui affecte la forme d'un arc dans le sens longitudinal conformément à la configuration de la tôle de protection, et possède un section en forme de rigole adaptée à la section de la tôle de protection, où

le préformé (1) à une longueur allant de l'extrémité inférieure de la tôle de protection (2) jusqu'au-delà de la zone des feux arrière resp. des réflecteurs, en s'orientant vers le haut, et une largeur occupant toute la largeur de la tôle de protection, et

où le préformé (1) comporte en outre sur ses deux bords longitudinaux des dispositifs d'insertion (3) et de verrouillage spécialement conformés pour la fixation desserrable sur la tôle de protection (2), caractérisée par le fait

que le préformé (1) est doté, du côté visible, d'un dispositif de reprise dépassant spécialement configuré (8/12) pour un réflecteur resp. un feu arrière (11).

2. Pièce de fermeture selon spécification 1, caractérisée par le fait que le préformé (1) comportant les dispositifs d'insertion et de verrouillage (3) et le dispositif de reprise (8/12) est fabriqué d'une seule pièce à partir d'une matière plastique de coloration blanche résistant aux coups et égratignures.

3. Pièce de fermeture selon spécifications 1 et 2, caractérisée par le fait que le dispositif de reprise (8) a la configuration d'un caisson dans lequel le réflecteur resp. le feu arrière (11) peut être fixé dans la position requise.

4. Pièce de fermeture selon spécifications 1 et 2, caractérisée par le fait que deux nervures parallèles dépassant vers l'extérieur, écartées de l'extrémité longitudinale inférieure du préformé (1), sont reliées au préformé (1) en tant que dispositif de reprise du feu arrière (11), avec, entre celles-ci, un socle (13) de lampe et qu'un réflecteur (15) est fixé aux nervures (12) par l'intermédiaire d'une liaison verrouillable et déverrouillable (16, 17).

5. Pièce de fermeture selon spécification 4, caractérisée par le fait que les nervures (12) prenant dans une zone partielle de la longueur du préformé (1) accusent, vues latéralement une forme de base triangulaire avec des côtés d'une longueur différente, le plus grand côté du triangle des nervures (12) étant tourné en direction de l'extrémité longitudinale inférieure de la pièce de fermeture, et que le réflecteur (15) est constitué par une pièce angulaire avec des côtés correspondant à la longueur des côtés du triangle des nervures, les extrémités avant de ces côtés affleurant le dessus du préformé.

6. Pièce de fermeture selon spécifications 4 et 5, caractérisée par le fait que les nervures (12) comportent sur les bords longitudinaux des côtés de leur triangle des bourrelets (17) dépassant vers l'intérieur ou l'extérieur ou des gorges (17) découpées à l'intérieur ou à l'extérieur, par l'intermédiaire desquels ou dans lesquels le réflecteur (15) est maintenu par verrouillage au moyen de pièces angatonistes en conséquence (16, 17).

7. Pièce de fermeture selon spécifications 4 et 6, caractérisée par le fait que le réflecteur (15) de forme angulaire possède sur ses deux arêtes longitudinales des bords repliés (18), dans la zone desquels est prévue la gorge (16) ou la languette (17), le réflecteur (15) venant affleurer entre les nervures (12) par l'intermédiaire de ces bords repliés (18) ou dépasse au moyen des bords (18) les nervures (12) dans la zone dégagée des bords.

8. Pièce de fermeture selon spécifications 1 et 2, caractérisée par le fait que le préformé (1) est directement fabriqué au niveau des deux bords longitudinaux avec des arêtes verrouillables (24) dépassant par l'intérieur et courant sur toute la longueur du préformé, tels que des bourrelets, des recourbures ou un dispositif similaire pour fixer avec desserrage possible la pièce de fermeture sur la tôle de protection (2).

9. Pièce de fermeture selon spécification 4, caractérisée par le fait que le préformé (1) est fabriqué avec un socle (13) de lampe et des nervures (12) d'une seule pièce à partir d'une matière plastique réfléchissante et qu'une pièce de mise à la terre (19) est encastrée dans le socle (13) de la lampe sous forme d'une vis, d'une tige, d'une tôle ou d'un dispositif similaire pour assurer le contact avec la tôle de protection (2), ainsi qu'un contact électrique (20) pour la lampe (21), un fil électrique (22) partant du contact électrique (20) sort du socle (13) et passe par une ouverture (23) ménagée dans le préformé (1).

10. Pièce de fermeture selon spécification 1, caractérisée par le fait que le préformé (1) comporte dans ses deux zones latérales des ouvertures de passage (10) en forme de trou ou de fente pour la fixation des nervures à la tôle de protection.

11. Pièce de fermeture selon spécification 1, caractérisée par le fait que les quatre angles du préformé (1) comportent des biseautages (6) ou des arrondissements.

*Fig.1*

*Fig.2*
II-II

Fig.3

Fig.4

Fig.5

Fig.6

Fig.7

Fig.8